# EUROPÄISCHE PATENTANMELDUNG

(11) **EP 1 044 847 A2**
(43) Veröffentlichungstag der Anmeldung: **18.10.2000**
(21) Anmeldenummer: 00107291.7
(22) Anmeldetag: 04.04.2000
(51) Int. Cl.: B60Q 1/00

(54) **Scheinwerfer-Leuchten-Einheit für Kraftfahrzeuge**

(30) Priorität: 14.04.1999 DE 19916683
(71) Anmelder: Hella KG Hueck & Co., 59552 Lippstadt (DE)
(72) Erfinder: Hesse, Konrad, 33142 Büren (DE)

(57) **Zusammenfassung**

Die Erfindung bezieht sich auf eine Scheinwerfer-Leuchten-Einheit, die in eine Karosserieöffnung einsetzbar und an der Karosserie befestigbar ist, mit einer Leuchte (2) und einem Scheinwerfer (1), die mittels einer an einer Seitenwand (3) der Leuchte einerseits und an einer Seitenwand (3) des Scheinwerfers (1) andererseits angreifenden Zugfeder (16) lösbar miteinander verbunden sind, und daß Mittel vorgesehen sind zum Verbringen der Zugfeder (16) in eine die vorgegebene Relativlage der Leuchte (2) zum Scheinwerfer (1) fixierende Spannposition, wobei die Zugfeder (16) mittels eines nicht parallel zur Längsachse desselben angeordneten und linear beweglichen langgestreckten Spannelementes (20) in die Spannposition bringbar ist, wobei das Spannelement (20) ein in einem Randbereich des Scheinwerfers (1) und/oder der Leuchte (2) angeordnetes äußeres Betätigungsende aufweist einerseits und einen in Richtung eines inneren Endes des Spannelementes (20) sich verjüngenden Abschnitt andererseits aufweist, wobei sich das Spannelement (20) in einem zentralen Bereich zwischen den Seitenwänden (3) des Scheinwerfers (1) und der Leuchte (2) erstreckt.

## Beschreibung

Die Erfindung betrifft eine Scheinwerfer-Leuchten-Einheit für Kraftfahrzeuge, die in eine Karosserieöffnung einsetzbar und an der Karosserie befestigbar ist, mit einer Leuchte und einem Scheinwerfer, die mittels einer an einer Seitenwand der Leuchte einerseits und an einer Seitenwand des Scheinwerfers andererseits angreifenden Zugfeder lösbar miteinander verbunden sind, und daß Mittel vorgesehen sind zum Verbringen der Zugfeder in eine die vorgegebene Relativlage der Leuchte zum Scheinwerfer fixierenden Spannposition.

Aus der DE 197 17 785 C1 ist eine Scheinwerfer-Leuchten-Einheit für Kraftfahrzeuge bekannt, bei der eine zwischen einer Seitenwand des Scheinwerfers und einer Seitenwand der Leuchte angeordnete Zugfeder in eine die Leuchte an dem Scheinwerfer arretierende Spannposition bringbar ist. Nachteilig an der bekannten Arretierung ist, daß zum Verbringen der Zugfeder in die Spannposition eine in horizontaler Richtung ausladende Exzentereinrichtung als zusätzliches Befestigungsmittel erforderlich ist, die voluminös ausgebildet ist und einen erheblichen Bauraum in seitlicher Richtung bedingt. Ferner ist nachteilig an der bekannten Scheinwerfer-Leuchten-Einheit, daß zur Betätigung der Exzentereinrichtung zusätzlich ein Betätigungswerkzeug erforderlich ist.

Aufgabe der vorliegenden Erfindung ist es daher, eine Scheinwerfer-Leuchten-Einheit für Kraftfahrzeuge derart weiterzubilden, daß die Befestigung der Leuchte an dem Scheinwerfer vereinfacht und daß der Bauraumbedarf für die Befestigungsmittel verringert wird.

Zur Lösung dieser Aufgabe ist die Erfindung in verbindung mit dem Oberbegriff des Patentanspruchs 1 dadurch gekennzeichnet, daß die Zugfeder mittels eines nicht parallel zur Längsachse desselben angeordneten und linear beweglichen langgstreckten Spannelementes in die Spannposition bringbar ist, wobei das Spannelement ein in einem Randbereich des Scheinwerfers und/oder der Leuchte angeordnetes äußeres Betätigungsende aufweist einerseits und einen in Richtung eines inneren Endes des Spannelementes sich verjüngenden Abschnitt andererseits aufweist, wobei sich das Spannelement in einem zentralen Bereich zwischen den Seitenwänden des Scheinwerfers und der Leuchte erstreckt.

Der Vorteil der erfindungsgemäßen Scheinwerfer-Leuchten-Einheit besteht darin, daß zum Verbringen der Zugfeder in eine die Leuchte mit dem Scheinwerfer fixierenden Spannposition ein langgestrecktes Spannelement vorgesehen ist, das linearbeweglich gelagert ist und durch Bewegung eines verjüngenden Abschnitts die Zugfeder in die vorgesehene Spannposition verbringen kann. Zum einen ermöglicht die Linearbewegung des Spannelementes eine vereinfachte Handhabung. Der erforderliche Kraftaufwand kann durch die Form des verjüngenden Abschnitts vorgegeben sein. Dadurch, daß das Spannelement mit einem äußeren Ende in einem Randbereich des Scheinwerfers angeordnet ist, kann das Spannelement manuell betätigt werden. Zum anderen ermöglicht die langgestreckte Ausbildung des Spannelementes eine platzsparende Anordnung desselben zwischen einer Seitenwand der Leuchte und einer Seitenwand des Scheinwerfers. Dabei erstreckt sich das Spannelement im wesentlichen in einer zu den Seitenwänden parallelen Ebene, so daß die Kontur der zueinandergekehrten Seitenwände des Scheinwerfers einerseits und der Leuchte andererseits über die gesamte Fläche eben ausgebildet sein kann.

Nach einer besonderen Ausführungsform der Erfindung ist als Mittel zur Führung der Zugfeder einerseits und des Spannelements andererseits ein einstückiges Führungselement vorgesehen, das durch Verrastung fest an einer Seitenwand des Scheinwerfers oder der Leuchte angeordnet ist. Das Führungselement ist klammerförmig ausgebildet und weist zwei senkrecht zueinander angeordnete Führungsebenen auf. Die eine Führungsebene dient zur Führung der Zugfeder, insbesondere eines U-förmigen Spannbügels der Zugfeder. Die andere Führungsebene dient zur Führung des Spannelementes, wobei das nach innen weisende Ende bzw. der verjüngende Abschnitt des Spannelements bei Arretierung die eine Führungsebene schneidet, und zwar unter Eintauchen in die durch den Spannbügel gebildeten Öffnung. Das Führungselement erfordert einen geringen Platzbedarf in horizontaler Richtung und vereinigt mehrere Führungs- bzw. Abstützfunktionen.

Nach einer Weiterbildung der Erfindung weist das Führungselement auf einer der Karosserieöffnung abgewandten Seite mindestens einen Bügelabschnitt auf, der einen Aufnahmeschlitz bildet zur Aufnahme des Spannbügels der Zugfeder. Er ermöglicht ein Abstützen der Zugfeder während des Spannvorgang desselben, so daß die Zugfeder im wesentlichen in der geradlinigen Position gehalten werden kann bzw. nicht abknickt.

Nach einer Ausgestaltung der Erfindung ist der verjüngende Abschnitt des Spannelementes als auf einer der Karosserieöffnung abgewandten Seite des Spannelementes angeordneten Schräge ausgebildet, die einen spitzen Winkel zu einer Vertikalen bildet. Auf diese Weise wird unter Anlage der Schrägfläche an den Spannbügel der Zugfeder dieselbe kontinuierlich in die Spannposition bewegt.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: einen horizontalen mittleren Längsschnitt durch eine Scheinwerfer-Leuchten-Einheit,
- Figur 2: eine perspektivische Darstellung eines Führungselementes, eines Spannelementes und einer Zugfeder am Anfang des Spannvorgangs der Zugfeder,

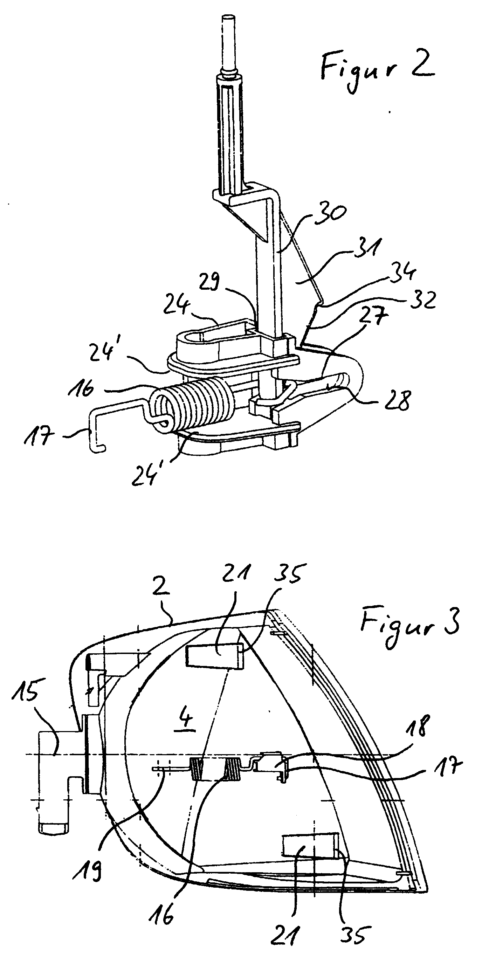

- Figur 3: eine Ansicht einer dem Scheinwerfer zugekehrten Seitenwand der Leuchte und
- Figur 4: eine teilweise Ansicht der der Leuchte zugewandten Seitenwand des Scheinwerfers.

Die Scheinwerfer-Leuchten-Einheit besteht im wesentlichen aus einem Scheinwerfer 1 und einer seitlich neben dem Scheinwerfer 1 angeordneten Leuchte 2, wobei der Scheinwerfer 1 und die Leuchte 2 jeweils an einer zueinander gekehrten Seitenwand 3 und 4 Befestigungsmittel aufweisen zum Arretieren der Leuchte 2 an dem Scheinwerfer 1.

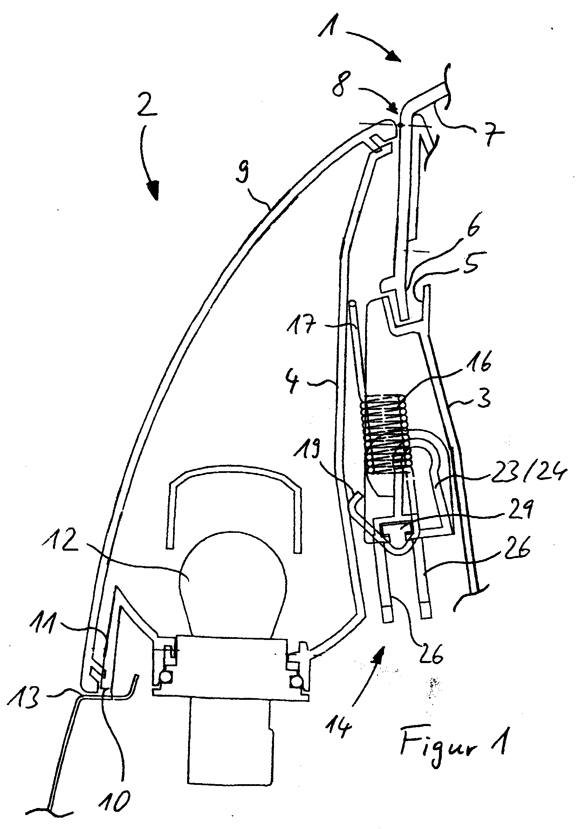

Wie in Figur 1 angedeutet ist, ist die Seitenwand 3 des Scheinwerfers 1 Teil eines Gehäuses, mit dem der Scheinwerfer 1 in einer Karosserieöffnung eines Kraftfahrzeugs eingesetzt ist. Das Gehäuse bildet eine Aufnahme für einen nicht dargestellten Reflektor sowie für eine nicht dargestellte Lichtquelle. Der vordere Rand des Gehäuses bzw. der Seitenwand 3 weist ein im Querschnitt U-förmiges Aufnahmebett 5 auf, in dem ein Steg 6 einer die Gehäuseöffnung des Scheinwerfers 1 abdeckenden Lichtscheibe 7 stoffschlüssig gelagert ist.

Unter Bildung eines Spaltes 8 schließt sich bündig an die Lichtscheibe 7 des Scheinwerfers 1 eine Lichtscheibe 9 der Leuchte 2 an, die sich bogenförmig in einem Eckbereich des Kraftfahrzeugs erstreckt. Die Lichtscheibe 9 ist stoffschlüssig an einem umlaufenden Rand 10 eines Gehäuses 11 gehaltert. In einem zentralen Bereich weist das Gehäuse 11 eine Öffnung auf, in der eine Lichtquelle 12 angeordnet ist. Im montierten Zustand liegen der Scheinwerfer 1 und die Leuchte 2 an einem Rand 13 der Karosserieöffnung an.

Zur Befestigung der Leuchte 2 an dem Scheiwerfer 1 sind Befestigungsmittel 14 in einem Bereich der Seitenwand 3 des Scheinwerfers 1 und der Seitenwand 4 der Leuchte 2 angeordnet.

An der Seitenwand 4 der Leuchte 2 ist in dem Bereich einer Mittelebene 15 eine sich horizontal erstreckende Zugfeder 16 angeordnet. Die Zugfeder 16 ist mit einem freien Ende 17 durch Verrastung an einem Rastelement 18 der Leuchte 2 fest mit derselben verbunden. An der gegenüberliegenden Seite weist die Zugfeder 16 als freies Ende einen U-förmigen Spannbügel 19 auf, der sich in einer zu der Seitenwand 4 senkrechten Ebene erstreckt. Der Spannbügel 19 ist bogenförmig ausgebildet und bildet eine Öffnung, in die ein an der Seitenwand 3 befestigtes Spannelement 20 eingreifen kann.

In einem oberen und unteren vorderen Randbereich der Seitenwand 4 sind jeweils sich parallel zu der Seitenwand 4 nach hinten erstreckende flexible Haltelappen 21 angeordnet. Diese Haltelappen 21 greifen in korrespondierend an der Seitenwand 3 des Scheinwerfers 1 angeordnete Aufnahmeaugen 22 ein und ermöglichen zum einen eine geführte Relativbewegung der Leuchte 2 zu dem Scheinwerfer 1 während der Montage und zum anderen einen Endanschlag bei der Relativbewegung der Leuchte 2 zu dem Scheinwerfer 1, wobei eine bündige Ausrichtung der Lichtscheibe 9 zu der Lichtscheibe 7 gewährleistet ist.

An der Seitenwand 3 des Scheinwerfers 1 ist ein Führungselement 23 durch Verrastung verbunden. Auf einer zur Karosserieöffnung zugewandten Seite weist das Führungselement 23 jeweils zwei im vertikalen Abstand zueinander angeordnete und sich in einer horizontalen Ebene erstreckende zwei Rastlappen 24 auf, die einen von der Seitenwand 3 abragenden Steg 25 rastend umfassen. Vorzugsweise erstreckt sich dieser Steg 25 bis zu einem vordem Rand der Seitenwand 3 und bildet somit eine Führung für die Zugfeder 16 während der Montage. Innere Rastlappen 24' bilden dabei eine Führungsfläche für die Zugfeder 16.

Auf einer der Karosserieöffnung abgewandten Seite weist das Führungselement 23 zwei nach hinten abragende in einem horizontalen zueinander beabstandete Bügelabschnitte 26 auf, die jeweils einen horizontal verlaufenden Aufnahmeschlitz 27 aufweisen. In den Aufnahmeschlitzen 27 ist der Spannbügel 19 der Zugfeder 16 bei eingeschobenem Zustand der Leuchte 2 gelagert, wobei auf einem inneren Rand 28 des Aufnahmeschlitzes 27 sich der Spannbügel 19 während des Spannvorgang abstützen kann.

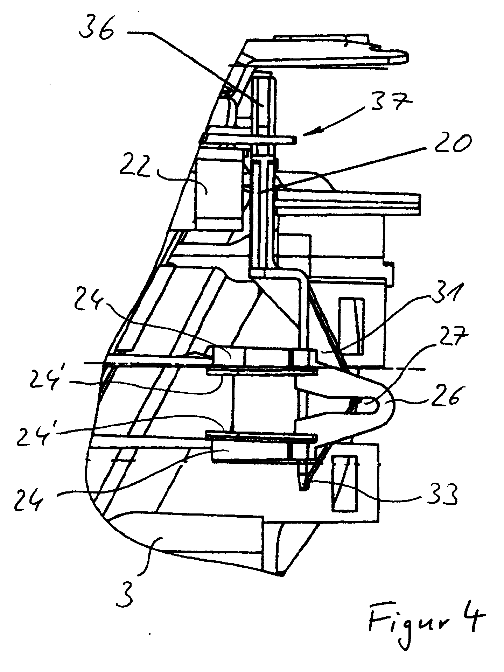

In einem mittleren Bereich des Führungselementes 23 sind im Bereich der Enden des U-förmigen Bügelabschnitts 26 eine Führungsnut 29 bzw. Durchführung vorgesehen, so daß seitlich von dem Spannelement 20 abragende Stege 30 mit Spiel in der Führungsnut 29 in vertikaler Richtung geführt sind. Die Führungsnute 29 sind fluchtend zueinander an den Enden des Bügelabschnitts 26 angeordnet. Wie insbesondere aus Figur 4 zu ersehen ist, weist das Spannelement 20 auf einer der Karosserieöffnung abgewandten Seite eine von den Stegen 30 nach hinten abragende Fahne 31 auf, deren Dicke kleiner ist als der horizontale Abstand der Bügelabschnitte 26. Die Fahne 31 ist starr ausgebildet und weist in einem unteren Abschnitt eine Schräge 32 auf, die einen spitzen Winkel zu einer vertikalen Ebene bildet. Die Fahne 31 ist nach unten spitz zulaufend bzw. verjüngend ausgebildet, wobei in der Spannposition der Zugfeder 16 ein inneres Ende 33 des Spannelementes 20 unterhalb der unteren Führungsnut 29 herausragt und ein oberer Enbereich der Schräge 32 unter Verklemmung des Spannbügels 19 gegen den bogenförmigen Teil des inneren Randes 28 des Aufnahmeschitzes 27 drückt. Vorzugsweise weist die Schräge 32 an dem oberen Ende eine muldenförmige Aufnahme 34, in der der Spannbügel 19 in der vorgegebenen Spannposition einrastet.

Das Spannelement 20 ist im wesentlichen stabförmig ausgebildet, wobei zur Bildung zu der Betätigung des Spannelementes 20 vorgesehenen Schräge 32 die Fahne 31 dreieckförmig gestaltet ist. Diese geometrische Form ermöglicht eine materialsparende und stabile Ausbildung des als Schräge 32 ausgebildeteten verjüngenden Abschnitts des Spannelementes 20.

Zur Montage der Leuchte 2 an dem Scheinwerfer 1 wird die Leuchte 2 von vorne in horizontaler Richtung in die durch den Scheinwerfer 1 und den Karosserierand gebildete Öffnung eingeschoben. In einem ersten Schritt greifen die Haltelappen 21 in die Aufnahmeaugen 22 der Seitenwand 3 des Scheinwerfers 1 ein. Die Leuchte 2 kann somit zielgerichtet in horizontaler Richtung weitergeführt werden, bis die Lichtscheibe 9 der Leuchte 2 bündig unter Bildung des Spaltes 8 an der Lichtscheibe 7 des Scheinwerfers 1 angeordnet ist. Als Anschlag dienen die fest mit der Seitenwand 4 der Leuchte 2 verbundenen Enden 35 der Haltelappen 21. Der Spannbügel 19 der Zugfeder 16 befindet sich in einem Bereich der Aufnahmeschlitze 27 und ist zum hinteren Ende des Aufnahmeschlitzes 27 beabstandet. Durch Betätigen des Spannelementes 20, d.h. durch Verschieben des Spannelementes 20 in vertikaler Richtung nach unten, wird ein nach hinten abragender Bereich des Spannbügels 19 von der Schräge 32 des Spannelementes 20 erfaßt und in horizontaler Richtung nach hinten verschoben. Dabei spannt sich die Zugfeder 16 und erzeugt eine horizontal wirkende Haltekraft auf die Leuchte 2. Sobald der Spannbügel 19 in die Aufnahme 34 der Schräge 32 eingreift, kann die an einem äußeren Ende 36 an des Spannelementes 20 anliegende Betätigungskraft gelöst werden. Vorzugsweise befindet sich das äußere Ende 36 auch in der Spannposition der Zugfeder 16 oberhalb eines Randes der Seitenwände 3 bzw. 4, so daß auf einfache Weise die Arretierung der Leuchte 2 an den Scheinwerfer 1, beispielsweise nach Auswechseln der Lichtquelle 12, von oben arretiert werden kann. Vorteilhaft ermöglicht somit die Erfindung lediglich eine Zugänglichkeit der Befestigungsmittel von oben. Das Betätigungsende 36 ist durch eine an der Seitenwand 3 angeformte Durchgangsbohrung 37 am oberen Rand derselben geführt.

In Abhängigkeit von der Lage der Scheinwerfer-Leuchten-Einheit zur Karosserie bzw. von der Formgebung des Scheinwerfers 1 bzw. der Leuchte 2 kann die Betätigungsrichtung des Spannelementes 20 auch in einem spitzen oder stumpfen Winkel zu der Wirkungslinie der Zugfeder 16 angeordnet sein. Darüberhinaus ist es auch möglich, die Zugfeder 16 statt an der Seitenwand 4 der Leuchte 2 an der Seitenwand 3 des Scheinwerfers 1 anzubringen. Die weiteren Befestigungsmittel befinden sich dann an der Seitenwand 4 der Leuchte 2. Hierdurch wird ermöglicht, daß eine fest an der Karosserie angeordnete Leuchte 2 mit einem entnehmbaren Scheinwerfer 1 formschlüssig verbunden werden kann. Darüberhinaus ist eine solche Befestigungsart auch zwischen zwei Scheinwerfer- oder Leuchtengehäusen möglich. Auf die Funktion der jeweiligen Lichtquelle kommt es nicht an.

## Patentansprüche

1. Scheinwerfer-Leuchten-Einheit für Kraftfahrzeuge, die in eine Karosserieöffnung einsetzbar und an der Karosserie befestigbar ist, mit einer Leuchte und einem Scheinwerfer, die mittels einer an einer Seitenwand der Leuchte einerseits und an einer Seitenwand des Scheinwerfers andererseits angreifenden Zugfeder lösbar miteinander verbunden sind, und daß Mittel vorgesehen sind zum Verbringen der Zugfeder in eine die vorgegebene Relativlage der Leuchte zum Scheinwerfer fixierenden Spannposition, dadurch gekennzeichnet, daß die Zugfeder (16) mittels eines nicht parallel zur Längsachse desselben angeordneten und linear beweglichen langgstreckten Spannelementes (20) in die Spannposition bringbar ist, wobei das Spannelement (20) ein in einem Randbereich des Scheinwerfers (1) und/oder der Leuchte (2) angeordnetes äußeres Betätigungsende (36) aufweist einerseits und einen in Richtung eines inneren Endes (33) des Spannelementes (20) sich verjüngenden Abschnitt (32) andererseits aufweist, wobei sich das Spannelement (20) in einem zentralen Bereich zwischen den Seitenwänden (3, 4) des Scheinwerfers (1) und der Leuchte (2) erstreckt.

2. Scheinwerfer-Leuchten-Einheit nach Anspruch 1, dadurch gekennzeichnet, daß Mittel zur Führung derart angeordnet sind, daß zum einen die Zugfeder (16) in Montagerichtung der Leuchte (2) oder des Scheinwerfers (1) und zum anderen das Spannelement (20) im wesentlichen senkrecht zur Montagerichtung der Leuchte (2) bzw. des Scheinwerfers (1) geführt sind.

3. Scheinwerfer-Leuchten-Einheit nach Anspruch 1 oder 2, dadurch gekennzeichnet, daß als Mittel zur Führung ein Klammerförmiges Führungselement (23) vorgesehen ist, das mit zwei Rastlappen (24, 24') rastend an der Seitenwand (3) des Scheinwerfers (1) befestigt ist, wobei innere Rastlappen (24') jeweils eine Führungsfläche für die Zugfeder (16) bilden.

4. Scheinwerfer-Leuchten-Einheit nach einem der Ansprüche 1 bis 3, dadurch gekennzeichnet, daß das Führungselement (23) mindestens eine Führungsnut (29) aufweist, derart, daß das Spannelement (20) in vertikaler Richtung geführt ist.

5. Scheinwerfer-Leuchten-Einheit nach einem der Ansprüche 1 bis 4, dadurch gekennzeichnet, daß der verjüngende Abschnitt als eine auf einer der Karosserieöffnung abgewandten Seite des Spannelementes (20) angeordnete Schräge (32) ausgebildet ist, die in eine durch einen Spannbügel (19) am freien Ende (19) der Zugfeder (16) gebildeten Öffnung eingreift zum Verbringen der Zugfeder (16) in die Spannposition.

6. Scheinwerfer-Leuchten-Einheit nach einem der Ansprüche 1 bis 5, dadurch gekennzeichnet, daß in einem vorderen Randbereich der Seitenwand (3) des Scheinwerfers (1) zwei parallel zur Montagerichtung orientierte und von der Seitenwand (3) des Scheinwerfers (1) abragende Aufnahmeaugen (22) angeordnet sind, in die jeweils ein einstückig mit der Seitenwand (4) der Leuchte (2) verbundener Haltelappen (21) eingreifbar ist.

7. Scheinwerfer-Leuchten-Einheit nach einem der Ansprüche 1 bis 6, dadurch gekennzeichnet, daß die Aufnahmeaugen (22) und die Haltelappen (21) jeweils im vertikalen Abstand zu einander angeordnet sind und daß in einem dazwischenliegenden mittleren Bereich das Führungselement (23) angeordnet ist.

8. Scheinwerfer-Leuchten-Einheit nach einem der Ansprüche 1 bis 7, dadurch gekennzeichnet, daß der Haltelappen (21) federnd ausgebildet ist.

9. Scheinwerfer-Leuchten-Einheit nach einem der Ansprüche 1 bis 8, dadurch gekennzeichnet, daß das Führungselement (23) auf einer der Karosserieöffnung abgewandten Seite mindestens einen Bügelabschnitt (26) aufweist mit einem Aufnahmeschlitz (27) zur Aufnahme des Spannbügels (19) der Zugfeder (16).

10. Scheinwerfer-Leuchten-Einheit nach einem der Ansprüche 1 bis 9, dadurch gekennzeichnet, daß sich der Spannbügel (19) in einer zur Seitenwand (3, 4) der Leuchte (2) und/oder des Scheinerfers (1) senkrechten Ebene erstreckt.
